## Europäisches Patentamt

## European Patent Office

## Office européen des brevets

(19)

(11) Publication number: **0 144 453**
**B1**

(12)

# EUROPEAN PATENT SPECIFICATION

(45) Date of publication of patent specification: **18.03.87**

(51) Int. Cl.[4]: **A 23 L 1/195**

(21) Application number: **83112166.0**

(22) Date of filing: **03.12.83**

(54) Starch thickener characterized by improved low temperature stability.

(43) Date of publication of application:
**19.06.85 Bulletin 85/25**

(45) Publication of the grant of the patent:
**18.03.87 Bulletin 87/12**

(84) Designated Contracting States:
**BE CH DE FR GB IT LI LU NL SE**

(56) References cited:
**GB-A-1 160 356**
**US-A-3 369 910**

**DIE STÄRKE, vol. 33, no. 1, 1981, pages 9-13, Verlag Chemie GmbH, Weinheim, DE; Y. IKAWA et al.: "Some structural characteristics of starches of maize having a specific genetic background"**

**THE BAKERS DIGEST, June 1969, pages 49-52,76; W.A. MITCHELL: "Natural and synthetic gums in frozen products"**

(73) Proprietor: **National Starch and Chemical Corporation**
**Box 6500**
**Bridgewater, N.J. 08807 (US)**

(72) Inventor: **Wurzburg, Otto B.**
**Felmley Road RR1 Box 45**
**Whitehouse Station New Jersey 08889 (US)**
Inventor: **Fergason, Virgil L.**
**2144 Hoyt Drive**
**Decatur Illinois 62526 (US)**

(74) Representative: **Hagemann, Heinrich, Dr. et al**
**Patentanwälte GEYER, HAGEMANN & PARTNER Postfach 860329**
**D-8000 München 86 (DE)**

Courier Press, Leamington Spa, England.

## 0 144 453

**Description**

This invention relates to a thickener containing starch, the aqueous sol of which is characterized by its superior low-temperature stability as indicated by its resistance to repeated freezing and thawing cycles, and to foodstuffs containing same.

Starch, in general, contains two types of polymers: a linear one known as amylose and a branched polymer known as amylopectin. Waxy starches, produced from such grains as waxy maize, waxy rice and waxy sorghum, contain a very much higher level of amylopectin than ordinary corn starch, and are of particular value in applications where the starch serves primarily as a thickener or stabilizer, and where a stable sol which resists retrogradation is desired.

To meet the critical needs of the food industry, in terms of food quality, processing, packaging and distribution, native waxy starches are often modified by numerous techniques known in the industry to change the behavioral characteristics yet still essentially retain the caloric value of the native (unmodified) starch.

One type of modification commonly employed in the art is crosslinking of the starch. When an aqueous dispersion of native starch is heated, the starch granules begin to swell, and the dispersion develops a short, salve-like texture which is essential in imparting palatability and in thickening food systems. However, during the process of cooking native starches, this textural state, particularly with waxy starches, rapidly changes to an elastic, rubbery state when the swollen granules rupture, and minor variations in cooking time, temperature, and concentration as well as shear and pH are sufficient to effect this transformation. Crosslinking modifications act to strengthen the granules by reinforcing the hydrogen bonds which are responsible for holding the granules intact and thus are used to overcome the extreme sensitivity of the swollen starch granules to handling and processing conditions.

Aqueous dispersions of crosslinked starch are often used under conditions which involve prolonged storage at relatively low temperatures and/or exposure, at times, to repeated freezing and thawing cycles. Thus, starch dispersions are used in fruit pie fillings, which are frequently canned, as well as in a number of frozen foods, such as frozen pies, soups and the like. In the case of canned food products, these are often stored in warehouses which have no heating facilities and may, therefore, be at very low temperatures for prolonged periods. Frozen foods are also subject to long term storage at very low temperatures. Under such circumstances involving exposure to low temperature, there is a distinct loss in the hydrating power of the starch which is present in such food products, thereby resulting in syneresis, an exudation of liquid, together with a marked deterioration in the texture, color and clarity of the food product. While sols of waxy starches are superior in stability to those of regular starches, even they are prone to intermolecular association during storage at or near freezing temperature.

Attempts to overcome these difficulties have in the past involved the introduction of substituted branches onto the starch molecule by means of various chemical derivatization reactions, for example, reacting the starch with a monofunctional reagent to introduce substituents such as hydroxypropyl, phosphate, acetate or succinate groups. Such substituents stabilize the starch by interfering with the association between molecules or portions of the same molecule, thus reducing the tendency of the substituted starches to lose their hydration ability and clarity on storage particularly at low temperatures.

These derivatization reactions alone may be carried out on native starches to improve their low-temperature stability, but are frequently employed in combination with crosslinking to obtain starches for use as thickeners in canned pie fillings, retorted puddings, etc., which will keep the food from losing its clarity and texture during storage or shipment in the winter and while frozen.

In recent years there has been a trend toward searching for starches which have all of the properties of a modified starch but without the chemical treatment. The US—A—3,525,672 discloses treating an inhibited starch with an enzyme such as beta-amylase to impart freeze-thaw stability thereto, but this is not at present a commercially feasible process.

The present invention provides a thickener containing starch the sol of which exhibits the low-temperature stability characteristics of chemically stabilized waxy starches. It further provides a thickener containing a starch particularly suited for use in preparing foodstuffs having good low-temperature stability.

The improved thickener composition comprises water and a waxy starch from a plant of a wxsu2 (homozygous) genotype, which starch is characterized by having a sol capable of withstanding at least one freeze-thaw cycle more than a sol of a native waxy starch from the respective plant which is not of a wxsu2 genotype. The mutant waxy starch from a selected plant species herein may be native or derivatized and/or crosslinked and will have a sol which will withstand at least one freeze-thaw cycle more than a sol of a common, ordinary, native waxy starch from the same plant species.

In preparing the thickener composition herein, the specified starch is mixed with water in any suitable proportion depending on its end-use, and the mixture is thereafter cooked as necessary. If the starch has been modified so as to be "cold water swellable", then cooking is unnecessary. It is noted that in forming the thickener, satisfactory results are generally obtained on mixing 1—20% by weight of the starch with 80—99% water, but proportions outside of these percentages may also be satisfactory in some applications.

It is to be understood that the invention herein is meant to include not only thickeners containing starch

2

but also those thickeners containing flour or any ground products from the plant such as, for example, grits, hominy and meal.

The sugary-2 genotype (designated as su2) is known to alter the carbohydrate composition of the maize endosperm, and the double-recessive mutant of the waxy (designated as wx) sugary-2 genotype is also known. It is unexpected, however, that the sol of a starch obtained from a waxy sugary-2 genotype would have excellent resistance to low-temperature breakdown, as compared with the sol of a corresponding ordinary native waxy maize starch, which will withstand only about one freeze-thaw cycle before losing its water-binding properties, gelling and exhibiting syneresis. The properties obtainable in the compositions herein were only achieved in the past by chemical derivatization of the waxy starch with a monofunctional reagent. The derivatization necessary to provide the composition herein with exceptional freeze-thaw properties is less than that required for a waxy starch.

The thickener composition herein may be advantageously employed in any foodstuff wherein a native or crosslinked or derivatized or crosslinked derivatized starch is utilized, such as, for example, in puddings, pie fillings, sauces, gravies, baby foods and the like. It is especially desirable, however, in foods subjected to storage at low temperatures, and in frozen foods. It is also especially desirable in applications where use of a waxy starch is preferable, i.e. where the starch functions predominately as a thickener or stabilizer.

In a preferred embodiment, the starch employed in the thickener herein is extracted from maize grown from double-recessive mutants of the waxy sugary-2 genotype, designated for purposes herein as wxsu2. The waxy gene is located at position 59 of Chromosome 9 of corn while the sugary-2 gene is located at position (57) of Chromosome 6. (See M. G. Nueffer, L. Jones, and M. Zuber, "The Mutants of Maize" (Crop Science Society of America, Madison, WI, 1968), pp. 72 and 73).

Also suitable herein is the starch resulting from wxsu2 mutants wherein the wx and/or su2 genotypes have been moved to another portion of the plant genome by translocation, inversion, or any other methods of chromosome engineering. In addition, starch extracted from a plant grown from artificial mutations and variations of the above genetic composition which may be produced by known standard methods of mutation breeding is also applicable herein. Our designation of the mutant as the wxsu2 genotype is intended to mean that the mutant will necessarily contain the wx and su2 genes, but is not limited thereto.

The waxy genotype imparts to the corn plant the ability to produce a starch which consists primarily or totally of amylopectin, and the phenotype, or physical expression, of the endosperm of the waxy genotype is opaque with a hard waxy texture. The phenotype of the endosperm of the sugary-2 genotype, on the other hand, is translucent and sometimes wrinkled. The results of an investigation by R. Creech into the effect of sugary-2 and waxy gene mutations, singly and in combination, on the maize endosperm and the properties thereof are reported in *Advances in Agronomy,* Vol. 20 (Academic Press, 1968), pp. 275—322 and in *Genetics, 52,* pp. 1175—1186, December, 1965. An article by R. M. Sandstedt, B. D. Hites, and H. Schroeder, entitled "The Effects Of Genetic Variations In Maize On the Properties Of The Starches", published as paper no. 1894, Nebraska Agricultural Experiment Station, describes several properties of starches obtained from various genetic mutants of maize include wxsu2. While the data in that report show the particular wxsu2 starch used there to have a greater sol stability to heat as well as a lower gelatinization temperature than the wx starch, such properties are not indicative of superior low-temperature stability. Starches obtained from mutant maize are also described by H. H. Kramer et al. in an article entitled "Gene Interactions In Maize Affecting Endosperm Properties" which appeared in *Agron. J., 50,* pp. 207—210 (1958).

To obtain the double-recessive mutant of the wxsu2 genotype in maize in a usual manner, one may, for example, cross a waxy mutant (wx) with a sugary-2 mutant (su2), and thereafter self pollinate the first generation single cross (Wx wx Su2 su2) to theoretically recover the double mutant in a 15:1 ratio from a segregating ear. The starch utilized herein may be obtained from inbred lines, but it is more desirable that the starch be obtained from hybrids derived from inbreds containing the wxsu2 double-recessive mutant, ordinarily because of higher yields and other factors. While maize is the preferred specific plant herein for the source of the waxy starch, other plant species are also suitable such as, for example, waxy rice, waxy barley and waxy sorghum, provided that they are of a wxsu2 genotype.

Extraction of the starch from the kernel of the maize grown from the double-recessive mutant seed may be carried out in a standard manner by the wet-milling or dry-milling process well known in the art, but is not limited to such methods. In one typical wet-milling process, which is preferred herein but serves only as an example of suitable such processes, the corn is cleaned by strong currents of air, sifters and electromagnets to remove unwanted material. It is thereafter steeped in warm water containing a small amount of sulfur dioxide. The steep-water is drawn off and the softened kernels are run through attrition mills to tear them apart. The germ is removed and the remaining mixture is ground, washed and sieved as a slurry. The starch is separated from the gluten by centrifugation, and the remaining slurried starch is then filtered, washed, resuspended and refiltered.

Extraction of flour or variants thereof from the maize kernel is accomplished by a dry-milling process. In a typical such procedure which is suitable herein but not exclusive of other procedures, the corn is first thoroughly cleaned and passed through a scourer and is then tempered or conditioned and passed through a corn degerminator. Stock from the degerminator is dried and then cooled, passed through a hominy separator and aspirator, ground, and finally sifted according to whether whole or separate fractions are desired.

It can be understood that some modifications in either of the above extraction processes such, for example, as using a steep-water temperature below that which is commonly employed, may be desirable and will be easily recognized by a starch practitioner.

The starch or flour thus obtained is tested for its properties at low temperature by the usual techniques wherein a sol is formed, as described further hereinbelow.

The starch herein may be modified, if desired, by procedures known in the art, such as by derivatization to form ethers or esters such as hydroxypropyl ethers, acetates, phosphates, succinates, e.g., octenyl succinate, tertiary and quaternary amine ethers, etc., or by any other modification techniques which produce a starch having the characteristics defined herein. The preferred substituent groups herein are hydroxypropyl, phosphate or acetate groups.

For commercial purposes, the preferred modification of the starch herein is crosslinking to strengthen the granules against the handling and processing conditions frequently encountered in manufacturing operations and to provide a starch capable of imparting desirable rheological properties to food systems. Any crosslinking agent may be employed for this purpose, such as, e.g., epichlorohydrin, linear dicarboxylic acid anhydrides, citric acid, acrolein, phosphorus oxychloride and trimetaphosphate salts, and the like. Other known crosslinking agents such as formaldehyde, cyanuric chloride, diisocyanates, divinyl sulfone and any other crosslinking agents capable of forming linkages between the starch molecules may also be employed if the product is not to be used in foods. Preferred crosslinking agents are those approved for use in foods and are most preferably phosphorus oxychloride, sodium trimetaphosphate (STMP) and adipic-acetic anhydride (1:4).

The crosslinking reaction itself is carried out according to standard procedures described in the literature for preparing crosslinked, granular starches such as that of, e.g., US—A—2,328,537 and US—A—2,801,242.

The amount of crosslinking agent necessary to give a suitable product will vary depending, for example, on the type of crosslinking agent employed, the concentration of the crosslinking agent, the reaction conditions, and the necessity for having a crosslinked starch which falls within the desired viscosity range. The practitioner will recognize which amounts may be employed, as these are well known in the art. Typically, this amount will range from as low as about 0.001%, by weight of the starch, to as high as is considered acceptable for food use.

In the examples which follow, all parts and percentages are given by weight unless otherwise noted.

The following analytical test is used in the examples to evaluate the low-temperature stability of the starch (or flour) herein. It is noted that evaluation of the low-temperature stability of the present starch would ordinarily involve extended storage thereof at such low temperatures. However, to obtain a faster but relatively accurate evaluation of the stability at low temperature, the freeze-thaw test herein was developed. A sol of the starch is prepared by mixing 3.75 g of starch at 12% moisture (3.3 g anhydrous) with 50 ml of distilled water. The starch slurry is adjusted, if necessary, to pH 5.0—6.0 with either 0.1N HCl or 0.1N NaOH, and two drops of McCormick red food colour are added thereto. The slurry is cooked for 20 minutes in a boiling water bath, with stirring until the starch granules swell. The starch sol thus obtained is placed in a 56,7 g (2-oz) jar, which is capped and placed in a freezer at −17,8°C (0°F) for about 66 hours. After completion of the initial freezing period, the sol is thawed at room temperature (6 hours), examined, and refrozen (18 hours) for the second cycle. Freeze periods (18 hours) and thaw periods (6 hours) are repeated for the third, fourth and fifth cycles. The sixth cycle requires a 66 hour freeze period, and the seventh through tenth cycles require an 18 hour freeze period. The test is continued until either a gel is formed which waters, or until the sol becomes opaque and its color becomes pink or there is a huge shift in viscosity and/or texture (e.g., it is thin and grainy), even though a gel has not formed. This latter state is a matter of degree. The number of successful cycles completed before the sol fails is recorded for each sample. It is to be understood that this test is a relative indication of stability, and controls are used with each set of samples.

Example I

This example illustrates the good low-temperature stability of the native and derivatized starches herein as compared with native and derivatized waxy maize starches.

The starches indicated in Table I were prepared by wet-milling of one of the sources given. The low-temperature stability was evaluated for each starch by the above-described procedure with results indicated in Table I.

**0 144 453**

TABLE I

| Type of Starch and Source* Thereof | Repeated Freeze-Thaw Cycles |
|---|---|
| Native waxy maize (control) | 1 |
| Waxy maize derivatized with 3% acetic anhydride (comparative)** | 1 |
| Waxy maize derivatized with 5% acetic anhydride (comparative)** | 1 |
| Waxy maize derivatized with 5% acetic anhydride and crosslinked with 0.12% adipic-acetic anhydride (comparative)** | 1 |
| Waxy maize derivatized with 3.0% propylene oxide and crosslinked with 0.02% phosphorus oxychloride (comparative)** | 1 |
| Waxy maize derivatized with 5.0% propylene oxide and crosslinked with 0.02% phosphorus oxychloride (comparative) | 2 |
| Waxy maize derivatized with 7.5% propylene oxide and crosslinked with 0.02% phosphorus oxychloride (comparative) | 7 |
| Waxy maize crosslinked with 0.4% STMP (comparative) | 1 |
| Native wxsu2A in a C103 germ plasm | 6 |
| Native wxsu2A in a germ plasm in the Custom Farm Seed Collection — CFS 8 | 3 |
| Native wxsu2B in a OH 45 germ plasm | 3 |
| Native wxsu2B in a germ plasm in the Custom Farm Seed Collection — CFS 8 | 6 |
| Native wxsu2C in a OH 45 germ plasm | 4 |
| Native wxsu2C in a modified Hy germ plasm | 7 |
| wxsu2B in a OH 45 germ plasm crosslinked with 0.4% STMP | 3 |
| wxsu2A in a modified B37 germ plasm derivatized with 5% acetic anhydride and crosslinked with 0.12% adipic-acetic anhydride | 9 |
| A 50:50 mixture of wxsu2A in a germ plasm in the Custom Farm Seed Collection — CFS8 and wxsu2A in a modified OH7 germ plasm derivatized with 3.0% propylene oxide and crosslinked with 0.02% phosphorus oxychloride | 8 |

*The letter designations after su2 refer to the different sources from which the sugary-2 genotype was obtained.

**These samples, which would ordinarily show a freeze-thaw stability significantly improved over the native waxy maize, show no difference in stability under the severe test herein because the test measures only extreme differences in low-temperature stability.

5

It can be seen from these results that the sol of the native starch herein exhibits freeze-thaw characteristics superior to those of native waxy maize starch and even of acetylated waxy maize starch. It is also apparent that all three sources of the sugary-2 gene which were tested yield starches (starch thickeners) which are excellent in terms of their freeze-thaw properties.

It is also noted that the crosslinked starch herein has superior low-temperature stability compared to that of crosslinked waxy maize; and the crosslinked derivatized starch herein is far more stable at low temperatures than a crosslinked waxy maize derivatized to the same extent. In fact, the crosslinked derivatized starch herein has low-temperature stability equal to or better than crosslinked waxy maize derivatized to much higher levels. It is also noted that the underivatized crosslinked starch herein has low-temperature stability equal to or better than that of the crosslinked waxy maize derivatized with up to 5% propylene oxide. These results are unexpected in view of one of the well-known purposes for employing a derivatizing agent, i.e., to increase the low-temperature stability of the starch.

Example II

The native starch derived from wxsu2A in a modified OH7 germ plasm was stirred into aqueous salt solutions of both high and low pH. Taste tests performed on the resulting starch slurries indicated that at both high and low levels of acid the starch did not adversely affect the taste of the slurries.

Example III

Two cherry pie fillings were prepared with identical ingredients and amounts except using as the starch therein either the waxy sugary-2 mutant starch herein crosslinked with 0.01% phosphorus oxychloride on starch, or, for comparison, a waxy maize which was derivatized with 5% acetic anhydride and crosslinked with 0.12% of adipic-acetic anhydride. When subjected to over ten freeze-thaw cycles (wherein each cycle involves freezing the sample overnight at −8,3°C (17°F) and then thawing for 6—7 hours), the cherry pie filling prepared with the native waxy sugary-2 mutant starch remained stable as compared to the pie filling prepared using the derivatized waxy starch, which withstood only six freeze-thaw cycles. Both pies had good appearance, taste and texture.

Example IV

In the preparation of tomato sauce, six peeled whole tomatoes are passed through a sieve to separate the tomato pulp from the juice. The starch of Example II is slurried in the tomato juice thus obtained (in an amount to equal 1.8% by weight of the total sauce) and the resulting slurry is cooked until thickening occurs. The tomato pulp and seasonings are then added and cooking is continued until the proper consistency in texture and viscosity is obtained. The resulting tomato sauce is found to be stable on undergoing repeated freezing and thawing cycles.

In the preparation of frozen brown gravy, the following ingredients are mixed thoroughly and the mixture is heated to 87,8°C (190°F).

| | |
|---|---|
| Beef Broth | 62.6% |
| Water | 24.3% |
| Starch of Ex. II | 3.0% |
| Wheat Flour | 2.0% |
| Salt | 1.4% |
| Monosodium glutamate | 0.4% |
| Spices | 1.2% |

Melted vegetable shortening, 5.1%, is slowly added to the hot mixture with constant agitation, and cooking at 87,8—90,6°C (190—195°F) is continued for eight minutes. Brown color is added to the gravy, as desired, and the gravy is packed in containers and frozen. The resulting brown gravy is found to be stable on undergoing repeated freezing and thawing cycles.

In the preparation of frozen pudding (butterscotch), the following ingredients are mixed thoroughly.

| | |
|---|---|
| Starch of Ex. II | 19.0% |
| Sugar | 40.0% |
| Malto-Dextrin | 20.0% |

| Nonfat Dry Milk Solids | 20.1% |
| Salt | 0.9% |
| Butterscotch flavor | to suit |

A portion of the above mixture, 22.35%, is added to 47.65% of water and 30.00% of cream replacement. The combined mixture is heated to 85,0—87,8°C (185—190°F) with good agitation and kept at that temperature for 10—15 minutes. The resulting pudding is packed in containers and frozen, and is capable of withstanding repeated freezing and thawing cycles.

A thickener containing starch, the sol of which starch is characterized by low-temperature stability comparable to that obtained on use of chemically stabilized waxy starches, is provided. The thickener composition may be employed in nonfood uses such, for example, as paints, pastes or adhesives, and is preferably employed as a thickener or stabilizer for a variety of foodstuffs.

## Claims

1. A thickened low-temperature foodstuff, comprising at least a foodstuff and a sol comprising water and an effective amount of waxy starch from a plant of a wxsu2 genotype, and translocations, inversions, mutants and variants thereof, characterized in that the foodstuff prepared with the sol is capable of withstanding at least one freeze-thaw cycle more than the sol of a native waxy starch from the respective plant which is not of a wxsu2 genotype.

2. The foodstuff of Claim 1, characterized in that the starch is a waxy maize starch.

3. The foodstuff of Claim 2, characterized in that the starch is a native starch.

4. The foodstuff of Claim 2, characterized in that the starch is crosslinked.

5. The foodstuff of Claim 4, characterized in that the starch is crosslinked with a crosslinking agent selected from epichlorohydrin, linear dicarboxylic acid anhydrides, acrolein, phosphorus oxychloride and trimetaphosphate salt employed in an amount of at least 0.001% by weight of the starch.

6. The foodstuff of Claim 2, characterized in that the starch is derivatized to contain substituent groups.

7. The foodstuff of Claim 6, characterized in that the starch is derivatized with a reagent suitable to form hydroxypropyl ether, phosphate, octenyl succinate, acetate or tertiary or quaternary amine ether derivatives.

8. The thickened foodstuff of Claim 2, characterized in that the foodstuff is a pie filling, tomato sauce, gravy or pudding.

9. A process for preparing the thickened low-temperature foodstuff of Claim 1, comprising combining at least the foodstuff and the sol and cooking the combination as necessary to provide the thickened foodstuff.

10. The process of Claim 9, characterized in that the starch is a waxy maize starch which is a native starch or a crosslinked and/or derivatized starch.

## Patentansprüche

1. Eingedicktes Niedrigtemperatur-Lebensmittel mit einem Gehalt an mindestens einem Lebensmittel und einem Sol, das Wasser und eine wirksame Menge einer wachsigen Stärke einer Pflanze vom wxsu2-Genotypis und von Translokationen, Inversionen, Mutanten und Varianten davon enthält, dadurch gekennzeichnet, daß das mit dem Sol hergestellte Lebensmittel imstande ist, mindestens einen Gefrier-Auftau-Zyklus mehr als das Sol einer natürlich vorkommenden wachsigen Stärke von der jeweiligen Pflanze, die nicht vom wxsu2-Genotypus ist, standzuhalten.

2. Lebensmittel nach Anspruch 1, dadurch gekennzeichnet, daß die Stärke wachsige Maisstärke ist.

3. Lebensmittel nach Anspruch 2, dadurch gekennzeichnet, daß die Stärke eine natürlich vorkommende Stärke ist.

4. Lebensmittel nach Anspruch 2, dadurch gekennzeichnet, daß die Stärke vernetzt ist.

5. Lebensmittel nach Anspruch 4, dadurch gekennzeichnet, daß die Stärke mit einem Vernetzungsmittel vernetzt ist, das unter Epichlorhydrin, linearen Dicarbonsäureanhydriden, Acrolein, Phosphoroxychlorid und einem Trimetaphosphatsalz, angewandt in einer Menge von mindestens 0,001 Gew.-% der Stärke, ausgewählt worden ist.

6. Lebensmittel nach Anspruch 2, dadurch gekennzeichnet, daß die Stärke derivatisiert ist, um Substituentengruppen zu enthalten.

7. Lebensmittel nach Anspruch 6, dadurch gekennzeichnet, daß die Stärke mit einem Reagenz derivatisiert ist, das zur Bildung von Hydroxypropylether-, Phosphat-, Octenylsuccinat-, Acetat- oder tertiären oder quaternären Aminether-Derivaten geeignet ist.

8. Eingedicktes Lebensmittel nach Anspruch 2, dadurch gekennzeichnet, daß das Lebensmittel eine Pastetenfüllung, Tomatensauce, Bratensauce oder Pudding ist.

9. Verfahren zur Herstellung des eingedickten Niedrigtemperatur-Lebensmittels nach Anspruch 1, das die Kombination von mindestens dem Lebensmittel und dem Sol und das nötige Kochen der Kombination umfaßt, um das eingedickte Lebensmittel zu erhalten.

10. Verfahren nach Anspruch 9, dadurch gekennzeichnet, daß die Stärke wachsige Maisstärke ist, bei der es sich um eine natürlich vorkommende Stärke oder um eine vernetzte und/oder derivatisierte Stärke handelt.

**Revendications**

1. Produit alimentaire épaissi à basse température, comprenant dans sa composition au moins un produit alimentaire et un sol constitué par de l'eau et par une quantité notable d'amidon cireux obtenu à partir d'une plante de génotype wxsu2 avec des transpositions, des inversions, des mutants et des variantes de celui-ci, caractérisé par le fait que le produit alimentaire préparé avec ledit sol est capable de supporter au moins un cycle congélation-décongélation de plus que le sol d'un amidon cireux naturel obtenu à partir d'une plante de la même espèce mais qui ne serait pas de génotype wxsu2.

2. Produit alimentaire selon la revendication 1, caractérisé par le fait que l'amidon est un amidon de maïs cireux.

3. Produit alimentaire de la revendication 2, caractérisé par le fait que l'amidon est un amidon naturel.

4. Produit alimentaire selon la revendication 2, caractérisé par le fait que l'amidon est réticulé.

5. Produit alimentaire selon la revendication 4, caractérisé par le fait que l'amidon est réticulé avec un agent réticulant choisi parmi: l'épichlorhydrine, les anhydrides linéaires d'acide dicarboxylique, l'acroléine, l'oxychlorure de phosphore, le sel de trimétaphosphate, et utilisé avec une teneur d'au moins 0,001 pour cent du poids de l'amidon.

6. Produit alimentaire de la revendication 2 caractérisé par le fait que l'amidon est dérivé pour contenir des groupes de substitution.

7. Produit alimentaire selon la revendication 6 caractérisé par le fait que l'amidon a été soumis à des réactions de dérivation avec un réactif convenable pour donner naissance à de l'éther d'hydroxypropylène, du phosphate, du succinate octénylique, de l'acétate ou des dérivés tertiaire ou quaternaire de l'éther aminé.

8. Produit alimentaire selon la revendication 2, caractérisé par le fait que ledit produit alimentaire est une garniture de tarte, de la sauce tomate, du jus de viante ou du pudding.

9. Procédé pour la préparation du produit alimentaire épaissi à basse température selon la revendication 1, caractérisé par le fait qu'il comporte la combinaison au moins du produit alimentaire avec le sol, ainsi que la cuisson de ladite combinaison dans la mesure nécessaire pour obtenir ledit produit alimentaire épaissi.

10. Procédé selon la revendication 9, caractérisé par le fait que l'amidon est un amidon de maïs cireux lequel peut être un amidon naturel ou un amidon réticulé et/ou dérivé.